# EUROPEAN PATENT APPLICATION

(11) **EP 4 407 187 A1**
(43) Date of publication of application: **31.07.2024**
(21) Application number: 24154186.1
(22) Date of filing: 26.01.2024
(51) Int. Cl.: F04D 25/06, F04D 29/051, F04D 29/058, B64D 13/06, F16C 32/04

(54) **AIRCRAFT ENVIRONMENTAL CONTROL SYSTEM VAPOR CYCLE COMPRESSOR WITH MOTOR-INTEGRATED ACTIVE MAGNETIC BEARINGS**

(30) Priority: 26.01.2023 US 202318159940
(71) Applicant: Hamilton Sundstrand Corporation, Charlotte, NC 28217-4578 (US)
(72) Inventor: GRATHWOHL, Nathan James, East Hartford, CT 06118 (US); KILCHYK, Viktor, Lancaster, NY 14086 (US)
(74) Representative: Dehns

(57) **Abstract**

Environmental control systems of an aircraft includes a condenser (206), an expansion valve (208), an evaporator (210), and a compressor (202) rotationally driven by a motor (304) having integrated magnetic bearings, wherein a working fluid (204) is passed through the condenser, the expansion valve, the evaporator, the compressor, and back to the condenser.

## Description

### TECHNICAL FIELD

The present disclosure generally relates to aircraft environmental control systems and motor systems for compressors thereof.

### BACKGROUND

Aircraft are equipped with environmental control systems (ECS) that are configured to treat and supply treated air to a cabin of the aircraft. Such systems may include compressors and generators, in combination with other components for generating, treating, and distributing air throughout an aircraft. The motors of such systems are configured to rotationally drive a compressor. The motors are coupled to the compressor by a shaft that may be mounted or supported on one or more sets of mechanical bearings. Mechanical bearings require lubrication and cooling to ensure proper operation thereof, and thus such system have ancillary systems for supporting the bearings of the motors. The cooling fluids (e.g., oil) for the bearings, may also be used to provide cooling to the motor windings or other components of the system. However, the use of mechanical bearings may cause debris to be generated during operation due to contact between components within the motors. Accordingly, improved motor systems can provide advantages to improve reliability and functionality.

### BRIEF DESCRIPTION

According to one aspect, environmental control systems of aircraft are provided. The environmental control systems include a condenser, an expansion valve, an evaporator, and a compressor rotationally driven by a motor having integrated magnetic bearings, wherein a working fluid is passed through the condenser, the expansion valve, the evaporator, the compressor, and back to the condenser.

Further embodiments of the environmental control systems may include a shaft operably coupling the motor and the compressor.

Further embodiments of the environmental control systems may include that the motor comprises a stator comprising windings configured to generate a magnetic field and the shaft comprises a set of rotor magnets arranged relative to the windings to cause rotation of the shaft in response to the generated magnetic field.

Further embodiments of the environmental control systems may include that the motor comprises a gear assembly arranged between the shaft and the compressor.

Further embodiments of the environmental control systems may include an axial support assembly arranged on the shaft to axially support the shaft relative to the motor.

Further embodiments of the environmental control systems may include that the axial support assembly comprises permanent magnetic bearings.

Further embodiments of the environmental control systems may include that the motor comprises a first motor unit, a second motor unit, and a magnetic bearing unit.

Further embodiments of the environmental control systems may include that the first motor unit provides two degrees of freedom, the second motor unit provides two degrees of freedom, and the magnetic bearing unit provides one degree of freedom.

Further embodiments of the environmental control systems may include that the first motor unit provides a radial degree of freedom, the second motor unit provides a radial degree of freedom, and the magnetic bearing unit provides an axial degree of freedom.

Further embodiments of the environmental control systems may include that the motor comprises a motor unit and a magnetic bearing unit.

Further embodiments of the environmental control systems may include that the motor unit provides two degrees of freedom and the magnetic bearing unit provides three degrees of freedom.

Further embodiments of the environmental control systems may include that the motor unit provides a radial degree of freedom and the magnetic bearing unit provides axial and radial degrees of freedom.

Further embodiments of the environmental control systems may include a controller configured to monitor a clearance gap between a rotating component of the compressor and a stationary component of the compressor, the controller configured to control the motor having integrated magnetic bearings to correct for a detected clearance gap that is outside a predetermined threshold.

Further embodiments of the environmental control systems may include that the working fluid passing through the condenser, the expansion valve, the evaporator, the compressor, and back to the condenser defines a vapor phase cycle.

According to another aspect, aircraft are provided. The aircraft include a cabin and an environmental control system. The environmental control systems include a condenser, an expansion valve, an evaporator, and a compressor rotationally driven by a motor having integrated magnetic bearings, wherein a working fluid is passed through the condenser, the expansion valve, the evaporator, the compressor, and back to the condenser.

Embodiments of the aircraft may include a shaft operably coupling the motor and the compressor.

Embodiments of the aircraft may include that the motor comprises a first motor unit, a second motor unit, and a magnetic bearing unit.

Embodiments of the aircraft may include that the motor comprises a motor unit and a magnetic bearing unit.

Embodiments of the aircraft may include that the motor does not include any mechanical bearings.

Embodiments of the aircraft may include that the working fluid passing through the condenser, the expansion valve, the evaporator, the compressor, and back to the condenser defines a vapor phase cycle.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1A is a schematic illustration of an aircraft that can incorporate various embodiments of the present disclosure;
FIG. 1B is a schematic illustration of a bay section of the aircraft of FIG. 1A;
FIG. 2 is a schematic diagram of a vapor cycle system of an aircraft environmental control system in accordance with an embodiment of the present disclosure;
FIG. 3 is a schematic diagram of an integrated bearings-electric motor in accordance with an embodiment of the present disclosure;
FIG. 4 is a schematic diagram of an integrated bearings-electric motor in accordance with an embodiment of the present disclosure;
FIG. 5 is a schematic diagram of an integrated bearings-electric motor in accordance with an embodiment of the present disclosure; and
FIG. 6 is a schematic illustration of a portion of a vapor phase cycle machine in accordance with an embodiment of the present disclosure.

### DETAILED DESCRIPTION

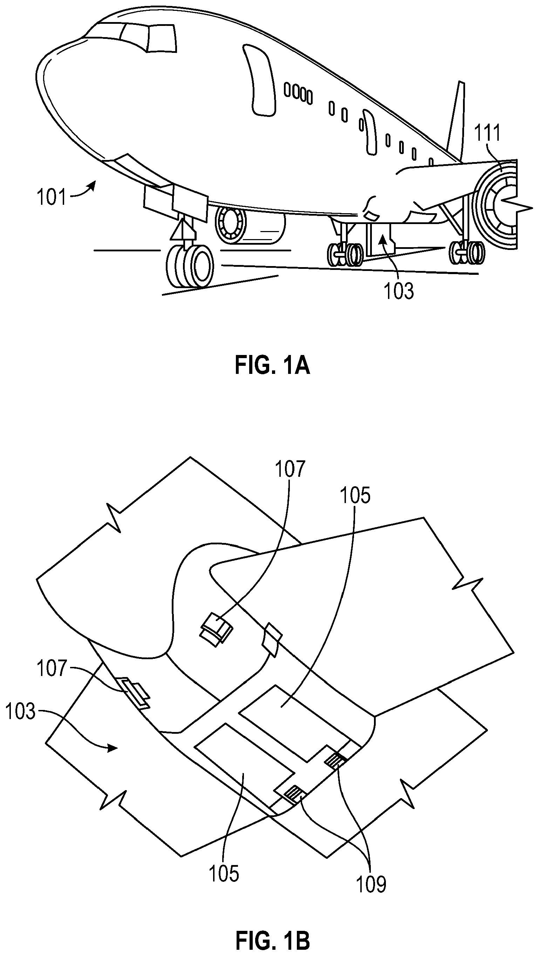

FIGS. 1A-1B are schematic illustrations of an aircraft 101 that can employ one or more embodiments of the present disclosure. As shown in FIGS. 1A-1B, the aircraft 101 includes bays 103 beneath a center wing box. The bays 103 can contain and/or support one or more components of the aircraft 101. For example, in some configurations, the aircraft 101 can include environmental control systems and/or fuel inerting systems within the bay 103. As shown in FIG. 1B, the bay 103 includes bay doors 105 that enable installation and access to one or more components (e.g., environmental control systems, fuel inerting systems, etc.). During operation of environmental control systems and/or fuel inerting systems of the aircraft 101, air that is external to the aircraft 101 can flow into one or more environmental control systems within the bay doors 105 through one or more ram air inlets 107. The air may then flow through the environmental control systems to be processed and supplied to various components or locations within the aircraft 101 (e.g., passenger cabin, fuel inerting systems, etc.). Some air may be exhausted through one or more ram air exhaust outlets 109.

Also shown in FIG. 1A, the aircraft 101 includes one or more engines 111. The engines 111 are typically mounted on wings of the aircraft 101 but may be located at other locations depending on the specific aircraft configuration. In some aircraft configurations, air can be bled from the engines 111 and supplied to environmental control systems (ECS) and/or fuel inerting systems, as will be appreciated by those of skill in the art. The engines 111 may be configured to generate both thrust for flight and electrical power generation for operation of electronics and/or other components onboard the aircraft 101.

The ECS of an aircraft may include a compressor for compressing a fluid. In some aircraft system configurations, the compressor may be part of a vapor compression cycle. The compressor may be driven by a motor. In conventional vapor compression cycles, the motor may be liquid cooled using a mixture of refrigerant and oil, the oil providing lubrication to the system and the refrigerant providing cooling. The motor may include bearing, to ensure smooth rotation of components (e.g., the compressor) and to prevent failures associated therewith.

In accordance with embodiments of the present disclosure, bearingless electric motors may be employed to drive rotation of a compressor of a vapor compression cycle of an aircraft environmental control system. Such bearingless electric motors combine functions of both torque generation and noncontact magnetic suspension. Such systems can provide advantages over conventional systems by improving the compactness of the systems, simplifies the structure and complexity, enables less maintenance, results in no wear particles, can achieve high rotational speeds, and so forth. As such, bearingless electric motors of the present disclosure provide for improved ECS and aircraft systems. As used herein, the term "bearingless" means a system that does not include traditional mechanical bearings (e.g., journal bearings, thrust bearings, foil bearings, etc.). The term "bearingless" does not mean that no bearing functionality is omitted, but rather that the bearing functionality is provided through means other than traditional/conventional mechanical bearings. Such traditional/conventional mechanical bearings typically require cooling and/or lubrication support systems to ensure functionality thereof, and "bearingless" systems, as described herein, do not include such support systems. As described herein, embodiments of the present disclosure are directed to electric motors. Such electric motors that may incorporate embodiments described herein may include, without limitation, induction motors, electric motors with permanent magnets, axial flux motors, radial flux motors, and the like.

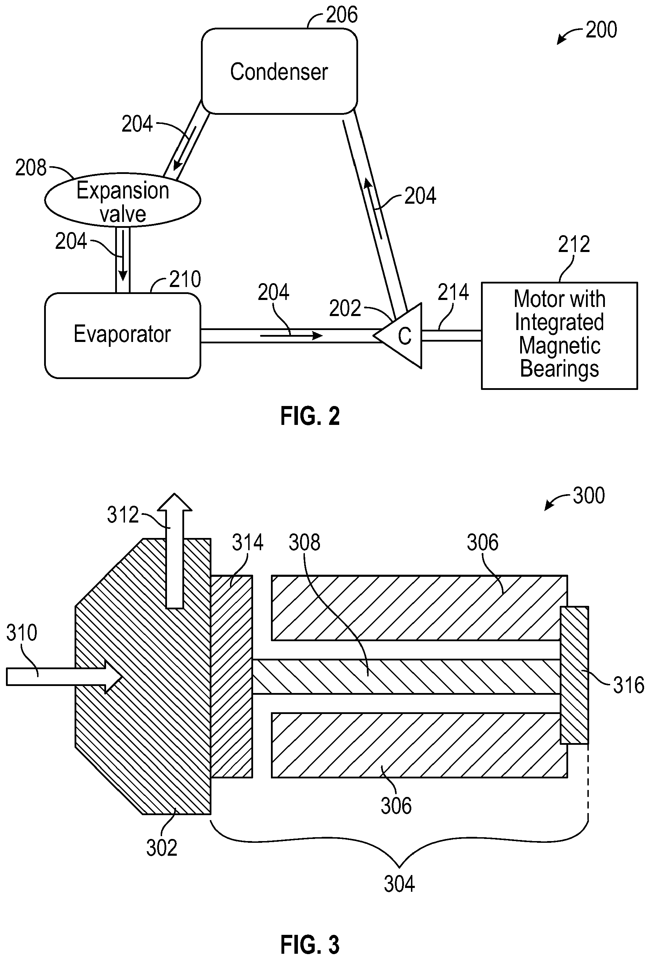

Referring now to FIG. 2, a schematic illustration of a vapor cycle system 200 of an aircraft environmental control system is shown. The vapor cycle system 200 includes a compressor 202 configured to compress a working fluid 204. The working fluid 204 is then directed into a condenser 206, expanded through an expansion valve 208, passed through an evaporator 210, and then cycled back to the compressor 202. The compressor 202 is rotationally driven by a motor 212 having integrated magnetic bearings. A drive shaft 214 operably couples the motor 212 to the compressor 202. The motor 212 is configured to be a bearingless system, employing magnetic features of the motor to provide magnetic bearings and thus eliminate conventional contact bearings.

FIG. 3 is a schematic illustration of a compressor system 300 in accordance with an embodiment of the present disclosure. The compressor system 300 may be part of a vapor phase cycle for use onboard an aircraft (e.g., part of an ECS). The compressor system 300 includes a compressor 302 that is configured to be rotationally driven by a motor 304. The motor 304 may be an integrated bearings-electric motor. To prevent contact between components of the motor 304, a magnetic bearing system is employed. The motor 304 includes motor windings 306 that includes a set of independent stator windings for torque generation applied to a shaft 308. The shaft 308 may include permanent magnets that may be arranged to be rotationally driven by an induced magnetic field applied by the motor windings 306. The shaft 308 may be coupled to the compressor 302 to drive rotation thereof. A fluid 310 may be input to the compressor 302 and compressed to generate and output a compressed fluid 312. The motor 304 may include an optional gear assembly 314 for speed reduction between the shaft 308 and the compressor 302. Further, the motor 304 may include an optional axial support assembly 316 (axial degree of freedom). The axial support assembly 316 may be a set of permanent magnetic bearings that are separate from the induction windings 306. As shown, the axial support assembly 316 may be arranged at an end of the shaft 308 opposite from the compressor 302 and/or the optional gear assembly 314.

In some embodiments, the compressor 302 may be configurated as any type of compression device. For example, and without limitation, the compressor 302 may be configured as a scroll compressor, a centrifugal compressor, a radial compressor, a screw compressor, a rotary vane compressor, a reciprocating compressor, or the like. Further the compressor 302 may have one or more stages, such as one-stage compression, two-stage compressor, and so-on.

The integrated bearings-electric motor 304 may include independent stator windings 306 for torque generation at the shaft 308. The stator windings 306 may also provide radial levitation and support of the components relative to the shaft 308, provide axial support, and tipping prevention. In some configurations, the integrated bearings-electric motor 304 may have five degrees of freedom ("DOF") (e.g., torque generation, radial levitation, axial support, and tipping prevention). The integrated bearings-electric motor 304 may be formed of multiple motor units, as described herein. Because the integrated bearings-electric motor 304 is bearingless (i.e., no mechanical bearings), there is no need or requirement to inject a liquid (e.g., oil) into the system to provide lubrication and cooling. That is, the absence of traditional mechanical bearing systems may be eliminated and thus the associated features (e.g., lubrication and/or cooling systems and components) are also eliminated. As such, the system may be made more compact and lighter than systems that require liquid cooling and lubrication. Furthermore, in addition to providing bearing functionality that replaces conventional mechanical bearings, the integrated bearings-electric motor 304, and other integrated bearings-electric motors described herein, provide torque. That is, the integrated bearings-electric motors of the present disclosure are configured to provide both torque and support in both radial directions (i.e., 3 total DOF directly supported), and axial support DOF, as described herein. Further, a tipping DOF may be constrained by having two or more radial supports.

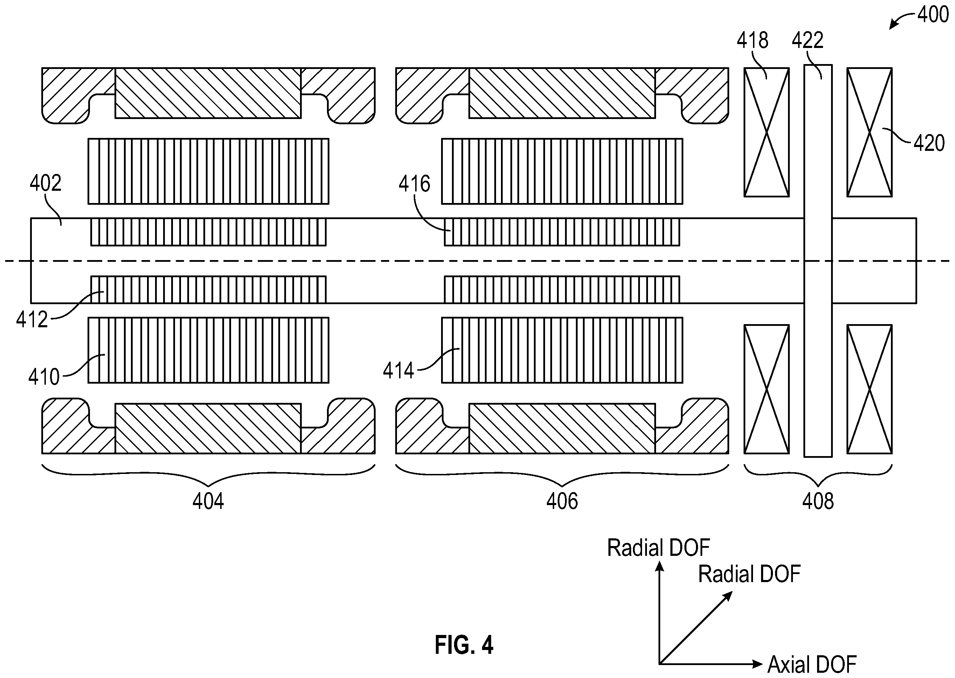

Referring now to FIG. 4, a schematic illustration of an electric motor 400 in accordance with an embodiment of the present disclosure is shown. The electric motor 400 may be part of a vapor cycle system of an aircraft environmental control system (e.g., as shown in FIG. 2). The electric motor 400 is configured to rotationally drive a shaft 402, that may be coupled to a compressor to rotationally drive the compressor. An optional gearing system may be provided between the shaft 402 and a compressor to provide speed control (e.g., speed reduction) to ensure proper operation of the compressor.

In this illustrative configuration, the electric motor 400 includes a first motor unit 404, a second motor unit 406, and a magnetic bearing unit 408. The first motor unit 404 may be a 3-DOF (degree of freedom) motor unit and may be bearingless. The first motor unit 404 includes a first stator winding 410 that is configured to induce a magnetic field and cause rotation of the shaft 402 by a first set of rotor magnets 412 arranged on the shaft 402. The second and third DOF support by the first motor unit 404 are both radial directions. Similarly, the second motor unit 406 may be a 3-DOF (degree of freedom) motor unit and may be bearingless. The second motor unit 406 includes a second stator winding 414 that is configured to induce a magnetic field and cause rotation of the shaft 402 by a second set of rotor magnets 416 arranged on the shaft 402. The second and third DOF support by the second motor unit 406 are both radial directions. The magnetic bearing unit 408 may be arranged as an axial magnetic bearing system configured to maintain axial positioning of the shaft 402 relative to, for example, the motor units 404, 406. The magnetic bearing unit 408 includes a first set of axial magnets 418 and a second set of axial magnets 420 arranged on opposite sides of a disk 422. The disk 422 may be fixedly coupled to the shaft 402 such that axial force applied to the disk 422 may be imparted to the shaft 402. As such, by positioning the axial magnets 418, 420 on opposite sides of the disk 422, the axial position of the shaft 402 may be maintained. In some embodiments, the axial magnets 418, 420 may be sets of permanent magnets. In other embodiments, the axial magnets 418, 420 may be sets of electromagnets that receive a current to generate a magnetic field. The electric motor 400 of FIG. 4 provides, for example, axial and radial degrees of freedom.

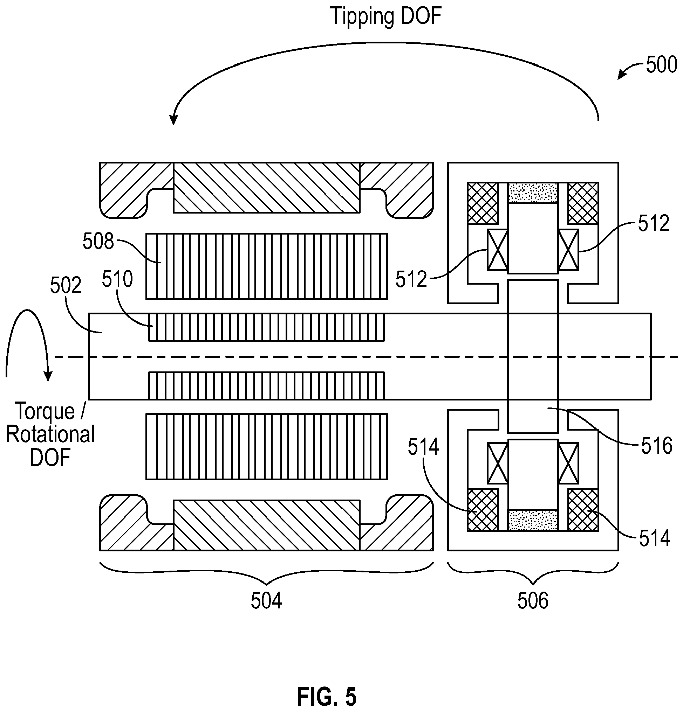

Referring now to FIG. 5, a schematic illustration of an electric motor 500 in accordance with an embodiment of the present disclosure is shown. The electric motor 500 may be part of a vapor cycle system of an aircraft environmental control system (e.g., as shown in FIG. 2). The electric motor 500 is configured to rotationally drive a shaft 502, that may be coupled to a compressor to rotationally drive the compressor. An optional gearing system may be provided between the shaft 502 and a compressor to provide speed control (e.g., speed reduction) to ensure proper operation of the compressor.

In this illustrative configuration, the electric motor 500 includes a motor unit 504 and a magnetic bearing unit 506. The motor unit 504 may be a 3-DOF (degree of freedom) motor unit and may be bearingless. The motor unit 504 includes a stator winding 508 that is configured to induce a magnetic field and cause rotation of the shaft 502 by a set of rotor magnets 510 arranged on the shaft 502. The motor unit 504 is configured to provide both torque on the shaft 502 and both radial direction DOF support via the integrated magnetic bearing unit 506. The radial support provided in this configuration, in conjunction with the radial support provided by the magnetic bearing unit 506 provides the tipping DOF constraint.

The magnetic bearing unit 506 may be arranged as an axial-radial magnetic bearing system configured to maintain axial and radial positioning of the shaft 502 relative to, for example, the motor unit 504. The magnetic bearing unit 506 includes a set of axial magnets 512 and a set of radial magnets 514 arranged on opposite sides of a disk 516. The disk 516 may be fixedly coupled to the shaft 502 such that axial force applied to the disk 516 may be imparted to the shaft 502. Similarly, the radial magnets 514 may provide radial force to ensure the shaft 502 is maintained in an operational position. In some embodiments, the magnets 512, 514 may be sets of permanent magnets. In other embodiments, the magnets 512, 514 may be sets of electromagnets that receive a current to generate a magnetic field. The electric motor 500 of FIG. 5 provides, for example, axial, radial, torque/rotational, and tipping degrees of freedom.

In each of the electric motors 400, 500 of FIGS. 4 and 5, the motor units 404, 406, 504 are all bearingless motor units. Because of the magnetic fields, the components of the motor units will be magnetically separated from each other, thus reducing or entirely eliminating contact of components. Because there is no contact, risk of friction heat and/or damage is eliminated and thus the motor units may be simplified as compared to mechanically driven systems that use bearings and the like. For example, because conventional mechanical bearings are eliminated from the motor units, lubrication and/or cooling of such bearings is eliminated. Accordingly, not only is a weight savings/improvement achieved through use of bearingless magnetic motor units (i.e., no weight of the bearings), additional weight savings (and reduced complexity) is achieved by eliminated ancillary components, such as oil pumps, heat exchangers, the oil itself, and the like, further weight savings may be achieved.

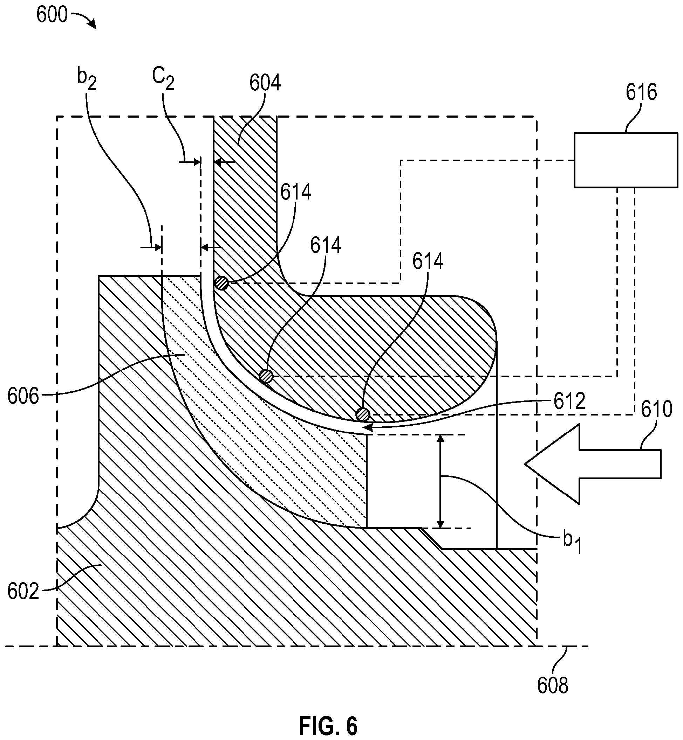

In some configurations, the use of bearingless motor units may enable improved control and operation of the machines into which the bearingless motor units are installed. For example, in some embodiments, the use of the magnetic bearing systems can enable improved clearance or gap control between rotating and nonrotating components of the systems. For example, referring now to FIG. 6, a schematic illustration of a portion of a vapor phase cycle machine 600 in accordance with an embodiment of the present disclosure is shown. The vapor phase cycle machine 600 includes a rotating portion (i.e., rotor 602) and a stationary portion (i.e., shroud 604). In this configuration, the rotor 602 includes a rotor blade 606, such as an impeller blade, that is rotatable about an axis 608. The rotor blade 606 is rotationally driven proximate the shroud 604. A vapor inlet 610 is indicative of a fluid flow through the vapor phase cycle machine 600 which is compressed along a length of the rotor blade 606. The vapor phase cycle machine 600 may incorporate an electric bearingless motor as shown and described above, with the rotor blade 606 arranged on a shaft similar to the shafts shown and described above.

A gap 612 between the rotor blades 606 and the shroud 604 defines a clearance that is a critical dimension to control during operation of the vapor phase cycle machine 600. Clearances that are too small can lead to "rubbing" where the rotating rotor blade 606 and static parts (e.g., shroud 604) interfere and can cause damage. In contrast, clearances that are too large reduces efficiency and overall system performance. Accordingly, it is beneficial to ensure that the gap 612 (dimension C₂) is maintained at a predetermined distance or range of distances (e.g., to accommodate vibrations, thermal expansion, etc.). As shown, the rotor blade 606 has a tapering dimension in a flow direction (e.g., direction of flow at vapor inlet 610). For example, at the inlet end of the rotor blade 606, the rotor blade 606 has a dimension b₁ and, at the outlet end, the rotor blade 606 has a dimension of b₂. However, it may be desirable to ensure the gap 612 is maintained to be substantially uniform from the inlet to the outlet.

Accordingly, as shown, the vapor phase cycle machine 600 may include one or more proximity sensors 614. The proximity sensors 614 may be arranged on the shroud 604 and proximate the location of a tip of the rotor blade 606 such that the gap 612 may be monitored by the sensors 614. The sensors 614 may be arranged in communication with a controller 616 that is configured to control operation of the vapor phase cycle machine 600, and particularly the operation of the magnetic bearings described above. For example, the clearance of the gap 612 can be actively monitored with the proximity sensors 614 placed between the rotating and static components. Readings from the proximity sensors 614 can be used to generate controller input to be sent from the controller 616 to the magnetic bearing systems. For example, inputs may be used to control the axial position of magnetic thrust bearings controlling of the shaft and rotor to ensure that the gap 612 is maintained at desired distances. Such magnetic thrust bearing may be integrated with the motor as described above. When the sensors 614 detect that the gap 612 is too large (e.g., excessed a predetermined value or threshold), the thrust bearings can be controlled to provide additional force to close the gap 612. Similarly, the opposite can occur when the sensors 612 detect contact is imminent (i.e., a gap detected below or less than a minimum clearance). The controller 616 may ensure that an axial movement of the shaft (and rotor 602) are axially moved to prevent such contact. For example, referring back to FIGS. 4-5, this control can be performed from the controller 616 communicating with the integrated magnetic bearing units 408 and 506.

In some embodiments, the controller 616 may be configured to perform a control logic. For example, the controller 616 may receive continuous or periodic updates of data from the sensors 614 regarding the size of the gap 612. When it is detected that the gap 612 exceeds a maximum gap size or a minimum gap size, the controller 616 is configured to cause an associated bearingless motor to generate a control signal that is sent to the bearingless motor. The bearingless motor will then induce an axial force on the shaft, based on the desired change. For example, if the gap size is increasing, the axial movement will be to ensure that gap size stops increasing or changes to shrink such gap. In contrast, if the gap size is decreasing, such as contact may occur, the axial movement induced in the shaft from the bearingless motor is to ensure the contact doesn't occur (e.g., increase the gap 612 or prevent further shrinking of the gap 612). The gap size (C₂) of the gap 612 is then monitored by the sensors 614 to confirm the desired change is achieved. The control logic then continues to monitor for any deviations of the gap size approaching preset limits and taking active, corrective action to ensure that the gap size does not exceed (maximum or minimum) the preset limits.

In accordance with embodiments of the present disclosure, the compressor of a vapor phase cycle of an aircraft environmental control system may include such integrated bearings-electric motors. That is, in some embodiments of the present disclosure, a motor may be provided without any mechanical bearings. Because the motor is magnetically driven and operated, the motor itself may provide the bearing functionality through the magnetic fields employed to drive rotation of the shaft of the compressor. As such, the motor units may be configured with not discrete or dedicated bearings, but rather are simplified by relying upon the magnetic levitation provided by the magnets of the motor and providing the separation of the components. Furthermore, as show in FIG. 2, the motor 212 with integrated magnetic bearings, may be configured without additional support systems, such as oil systems for lubrication and/or cooling functionality. Accordingly, the vapor cycle systems of an aircraft environmental control systems in accordance with embodiments of the present disclosure may be improved.

The use of bearingless motors in compressors of vapor phase systems on aircraft provides advantages, as described herein. The bearingless motors are motors with an integrated magnetic bearing (levitation) functionality, which eliminates lubrication and sealing. No particles are generated between the rotor and the stator due to the contact-free bearing and the stator can be sealed hermetically. Further, the magnetic bearings provide a high reliability, high precision clearance control, without the need for additional magnetic bearings and related control system(s). Additionally, an oil-less system simplifies system modeling and improves efficiency of the vapor cycle due to heat exchanger losses when coated with oil lower. Furthermore, integrated bearings-electric motors as described herein may provide nearly constant rotational speed and torque ripples and cogging torque may be reduced as compared to conventional motor units.

The use of the terms "a," "an," "the," and similar references in the context of description (especially in the context of the following claims) are to be construed to cover both the singular and the plural, unless otherwise indicated herein or specifically contradicted by context. The modifier "about," "substantially," and/or "approximately" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

While the invention has been described in detail in connection with only a limited number of embodiments, it should be readily understood that the invention is not limited to such disclosed embodiments. Rather, the invention can be modified to incorporate any number of variations, alterations, substitutions, combinations, subcombinations, or equivalent arrangements not heretofore described, but which fall within the scope of the invention as defined by the claims.

Accordingly, the present disclosure is not to be seen as limited by the foregoing description but is only limited by the scope of the appended claims.

## Claims

1. An environmental control system of an aircraft comprising:
a condenser (206);
an expansion valve (208);
an evaporator (210); and
a compressor (202) rotationally driven by a motor (304) having integrated magnetic bearings, wherein a working fluid (204) is passed through the condenser, the expansion valve, the evaporator, the compressor, and back to the condenser.

2. The environmental control system of claim 1, further comprising a shaft (214) operably coupling the motor and the compressor.

3. The environmental control system of claim 2, wherein the motor comprises a stator comprising windings (306) configured to generate a magnetic field and the shaft comprises a set of rotor magnets (412) arranged relative to the windings to cause rotation of the shaft in response to the generated magnetic field.

4. The environmental control system of claim 2, wherein the motor comprises a gear assembly (314) arranged between the shaft and the compressor.

5. The environmental control system of claim 2, further comprising an axial support assembly (316) arranged on the shaft to axially support the shaft relative to the motor.

6. The environmental control system of claim 5, wherein the axial support assembly comprises permanent magnetic bearings.

7. The environmental control system of any preceding claim, wherein the motor comprises a first motor unit (404), a second motor unit (406), and a magnetic bearing unit (408).

8. The environmental control system of claim 6, wherein the first motor unit provides two degrees of freedom, the second motor unit provides two degrees of freedom, and the magnetic bearing unit provides one degree of freedom.

9. The environmental control system of claim 7, wherein the first motor unit provides a radial degree of freedom, the second motor unit provides a radial degree of freedom, and the magnetic bearing unit provides an axial degree of freedom.

10. The environmental control system of any of claims 1 to 5, wherein the motor comprises a motor unit and a magnetic bearing unit.

11. The environmental control system of claim 8, wherein the motor unit provides two degrees of freedom and the magnetic bearing unit provides three degrees of freedom.

12. The environmental control system of claim 10, wherein the motor unit provides a radial degree of freedom and the magnetic bearing unit provides axial and radial degrees of freedom.

13. The environmental control system of any preceding claim, further comprising a controller (616) configured to monitor a clearance gap between a rotating component of the compressor and a stationary component of the compressor, the controller configured to control the motor having integrated magnetic bearings to correct for a detected clearance gap that is outside a predetermined threshold.

14. The environmental control system of any preceding claim, wherein the working fluid passing through the condenser, the expansion valve, the evaporator, the compressor, and back to the condenser defines a vapor phase cycle.

15. An aircraft comprising:
a cabin; and
an environmental control system as claimed in any preceding claim.
